# EUROPEAN PATENT APPLICATION

(11) **EP 4 730 463 A1**
(43) Date of publication of application: **22.04.2026**
(21) Application number: 25208510.5
(22) Date of filing: 14.10.2025
(51) Int. Cl.: H01M 10/0525, H01M 10/0567, H01M 10/0568, H01M 10/0569

(54) **LIQUID ELECTROLYTE COMPRISING SULFONAMIDE AND AT LEAST TWO LITHIUM SALTS, AND USES THEREOF**

(30) Priority: 15.10.2024 EP 24383128
(71) Applicant: Basquevolt S.A.U., 01510 Vitoria-Gasteiz, Álava (ES)
(72) Inventor: PISZCZ, Michal, E-01510 Vitoria-Gasteiz, Álava (ES); WIZNER, Agnieszka, E-01510 Vitoria-Gasteiz, Álava (ES); CHAKRABORTY, Saheli, E-01510 Vitoria-Gasteiz, Álava (ES); GIORDANI, Vincent, E-01510 Vitoria-Gasteiz, Álava (ES); MARTÍNEZ-IBÁÑEZ, María, E-01510 Vitoria-Gasteiz, Álava (ES); ARMAND, Michel, E-01510 Vitoria-Gasteiz, Álava (ES); MEABE, Leire, E-01510 Vitoria-Gasteiz, Álava (ES); GOUJON, Nicolas, E-01510 Vitoria-Gasteiz, Álava (ES)
(74) Representative: ABG Intellectual Property Law, S.L.

(57) **Abstract**

The present invention relates to a liquid electrolyte comprising:
i. at least one sulfonamide with general formula I 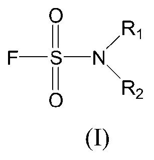 ii. a combination of at least two lithium salts; and
iii. at least one co-solvent and/or one filler;
and wherein the liquid electrolyte does not comprise an organic carbonate.

The invention also relates to electrochemical cell and uses thereof, and to methods for preparing the liquid electrolyte and electrochemical cell.

## Description

### FIELD OF THE INVENTION

The present invention relates to the field of liquid electrolytes for use in electrochemical cells or batteries. The present invention may find widespread application in energy storage and electronic devices.

### BACKGROUND

Lithium metal batteries (LMBs) arguably represent an attractive technology for energy storage applications due to their high energy density. Commercial batteries primarily use liquid electrolytes (LEs) as the ion-transport media owing to their high ionic conductivity and exceptional wettability with electrodes and separator. On the other hand, solid electrolytes, such as those made of polymers, ceramics or their hybrids, feature a lower conductivity than that of established liquid electrolytes.

Typical liquid electrolytes are organic carbonates and ethers, such as ethylene carbonate (EC), ethyl methyl carbonate (EMC), 1,2-dimethoxyethane (DME), etc. However, liquid carbonate electrolytes may be associated to high flammability, low thermal stability and sub-optimal electrode-electrolyte interfacial resistance. These issues represent a major obstacle to a practical use of liquid electrolytes in LMBs.

Several sulfonamides have been used as component of liquid electrolytes, however other organic carbonates are generally required to achieve stable electrochemical cycling.

For example, document EP3050872A1 relates to an electrolyte solution comprising a fluorinated sulfonamide according to the general formula R¹-SO₂-NR₂R₃ as part of a solvent system and an electrolyte salt, however this document teaches that flammable carbonate solvents are essential to solve the corresponding technical problem (e.g., aluminum current collector corrosion) while maintaining high electrolyte conductivity.

US9065146B2 describes a non-aqueous electrolyte which comprises a non-aqueous organic solvent and a lithium salt dissolved therein, wherein the non-aqueous organic solvent contains at least one compound selected from the group consisting of acid anhydrides and carbonic esters having an unsaturated bond, and at least one compound selected from the group consisting of sulfonic compounds and fluorine-containing aromatic compounds having 9 carbon atoms or less.

WO2022216593A1 discloses electrolytes and electrochemical cells which comprise asymmetric sulfonamides, lithium salts and carbonates.

US8802301B2 refers to ionic liquid compositions as electrolytes for lithium-ion batteries containing an alkylsulfonamide or an arylsulfonamide and lithium fluoroalkylsulfonimides or fluoroarylsulfonimides under certain sulfonamide/lithium salt ratios and with a Tg of the resulting mixture lower than -50°C.

WO2022053881A1 discloses an electrolyte composition that comprises one or more sulfonyl-based solvents for electrolytes used in electrochemical devices, such as secondary batteries. The electrolytes may include one or more salts, such as one or more alkali-metal salts, dissolved in said sulfonyl-based solvent system.

US2024/322244 describes a liquid electrolyte comprising a lithium salt composition, a solvent composition and a diluent composition, wherein the diluent composition includes a fluorinated or non-fluorinated alkane.

Xue Weijiang et al. (Energy & Environmental Science, 2020, 13(1), 212-220) describes a liquid electrolyte comprising dimethylsulfamoyl fluoride and a combination of two lithium salts, namely LiFSI and LiPF₆ without any co-solvent.

Despite the advances in the field, electrolyte systems displaying improved safety, stability towards Li-metal anode improved interfacial resistance and/or lead to high conductivity are yet to be discovered. Thus, there is a need in art to develop new electrolyte systems, particularly liquid electrolytes, which overcome the safety and Li-metal stability issues of state-of-art liquid electrolytes and, at the same time, offer a viable electrochemical performance for widespread application.

### BRIEF DESCRIPTION OF THE INVENTION

The present invention relates to liquid electrolyte comprising a sulfonamide, at least two lithium salts and a co-solvent. The inventors have found that such electrolyte composition enables the development of electrochemical cells that display advantageous properties, such as high Li-metal stability, improved safety and improved interfacial resistance without compromising the electrolyte conductivity. In addition to that, the liquid electrolyte of the invention provides electrochemical cells exhibiting superior capacity retention than cells having other liquid electrolytes lacking a co-solvent or having only one lithium salt, with coulombic efficiencies higher than 99%.

Furthermore, the electrolyte composition is characterized by lacking an organic carbonate, as it has been shown that the presence of said carbonate significantly affects the cyclability of the cell wherein the liquid electrolyte is contained.

Thus, a first aspect of the invention refers to a liquid electrolyte comprising:
i. at least one sulfonamide with general formula I: 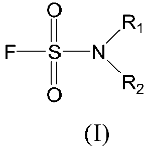 wherein
   - R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), a C₆-C₁₂ aryl group which may be substituted with one or more fluorine atom(s), and CH₂CH₂O-(CH₂CH₂O)ₙ-R₃, wherein R₃ is a methyl or ethyl group and n is an integer from 0 to 20; or R₁ and R₂ may be combined with each other to form a nitrogen-containing aliphatic ring;
ii. a combination of at least two lithium salts, selected from the group consisting of LiClO₄, LiNO₃, LiBF₄, LiAsF₆, LiPF₆, LiBF₃Cl, LiF, LiN(SO₂F)₂, LiN(SO₂CF₂H)₂, LiN(SO₂CF₃)₂, LiN(SO₂CF₃)(SO₂CF₂H), LiN(SO₂CF₃)(SO₂F), LiN(SO₂CHF₂)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃ and LiCF₃SO₃; and
iii. at least,
   a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, - (CH₂)ₙCF₃, -(CH₂)ₙF, or -(CH₂)ₙCH₂F or -(CH₂)ₙCHF₂ where n = 1-10; and/or
   b. one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2-trifluoroethoxy)ethane (D2), bis(2,2,2-trifluoroethyl)ether (BTFE), 1,1,2,2-tetrafluoroethyl-2,2,3,3-tetrafluoropropylether (TTE) and polyoxyethylene alkyl ethers,
and wherein the liquid electrolyte does not comprise an organic carbonate.

A second aspect of the invention refers to an electrochemical cell or battery comprising the liquid electrolyte of the first aspect of the invention, and a cathode.

A third aspect of the invention refers to the use of the electrochemical cell or battery of the second aspect, in electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; and electric power storage systems.

A fourth aspect of the invention is directed at a method for preparing the liquid electrolyte of the first aspect comprising the steps of:
(i) providing a combination of at least two lithium salts;
(ii) mixing at least one sulfonamide of formula I with the salts of step (i);
(iii) adding to the mixture at least,
   a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, - (CH₂)ₙCH₃, -(CH₂)ₙCF₃, -(CH₂)ₙF, or -(CH₂)ₙCH₂F or -(CH₂)ₙCHF₂ where n = 1-10; and/or
   b. one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers; and
(iv) stirring the resulting mixture.

A fifth aspect of the invention is directed at a method for preparing the electrochemical cell or battery of the second aspect comprising the steps of:
(i) providing a cathode for an electrochemical cell or a battery;
(ii) providing an anode for an electrochemical cell or a battery;
(iii) providing the liquid electrolyte as defined in the first aspect of the invention or in any preferred or particular embodiment thereof; and
(iv) coating the surface of the cathode provided in step (i) and of the anode provided in step (ii) with the electrolyte provided in step (iii), being said surfaces optionally covered with a porous separator, prior to coating with the electrolyte, in a manner that the electrolyte is arranged between the cathode and the anode such that lithium cations can flow from the cathode to the anode.

### DESCRIPTION OF THE FIGURE

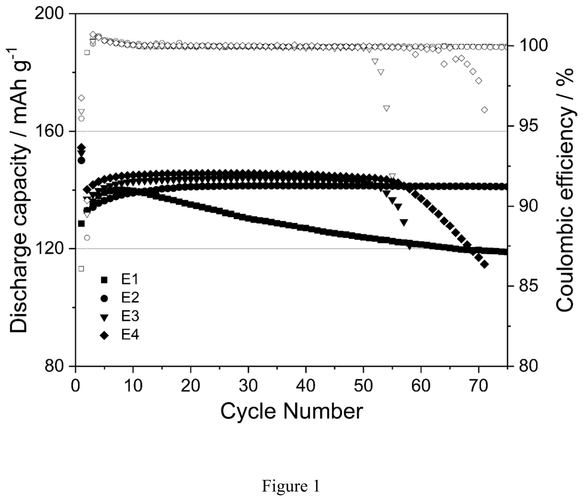

**Figure 1** shows the capacity retention vs. cycle number for the Li°∥LFP cells at 25 °C, comprising an electrolyte containing a) a mixture of LiFSI lithium salt in FSA11 at a molar concentration of 1.0 M (E1); b) LiFSI/LiDFOB lithium salts at a molar concentration of 0.95 M and 0.05 M, respectively in a FSA11/Triglyme in 90/10 vol.% ratio of solvents (E2); c) LiFSI/LiDFOB lithium salts at a molar concentration of 0.95 M and 0.05 M, respectively in a FSA11/EC in 90/10 vol.% ratio of solvents (E3); and d) LiFSI/LiDFOB lithium salts at a molar concentration of 0.95 M and 0.05 M, respectively in a FSA11/FEC in 90/10 vol.% ratio of solvents (E4).

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention.

Throughout the description and claims, the terms "blend(s)" and "mixture(s)" will be used interchangeably.

For the purposes of the invention, any ranges given include both the lower and the upper end-points of the range. Ranges or values given, such as temperatures, times, molar ratio, volume ratio and the like, should be considered approximate when they are defined by the term "about" (i.e. with a 5% margin of variation around indicated point).

As mentioned above, a first aspect of the invention refers to a liquid electrolyte comprising:
i. at least one sulfonamide with general formula I 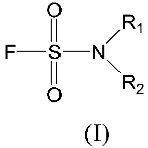 wherein
   - R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), a C₆-C₁₂ aryl group which may be substituted with one or more fluorine atom(s), and CH₂CH₂O-(CH₂CH₂O)ₙ-R₃, wherein R₃ is a methyl or ethyl group and n is an integer from 0 to 20; or R₁ and R₂ may be combined with each other to form a nitrogen-containing aliphatic ring;
ii. a combination of at least two lithium salts, selected from the group consisting of LiClO₄, LiNO₃, LiBF₄, LiAsF₆, LiPF₆, LiBF₃Cl, LiF, LiN(SO₂F)₂, LiN(SO₂CF₂H)₂, LiN(SO₂CF₃)₂, LiN(SO₂CF₃)(SO₂CF₂H), LiN(SO₂CF₃)(SO₂F), LiN(SO₂CHF₂)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃ and LiCF₃SO₃; and
iii. at least,
   a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, - (CH₂)ₙCF₃, -(CH₂)ₙF, or -(CH₂)ₙCH₂F or -(CH₂)ₙCHF₂ where n = 1-10; and/or
   b. one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2-trifluoroethoxy)ethane (D2), bis(2,2,2-trifluoroethyl)ether (BTFE), 1,1,2,2-tetrafluoroethyl-2,2,3,3-tetrafluoropropylether (TTE) and polyoxyethylene alkyl ethers;
and wherein the liquid electrolyte does not comprise an organic carbonate. Embodiments regarding the first aspect of the invention will be given below.

### Sulfonamide

The liquid electrolyte of the present invention comprises at least one sulfonamide of formula I as shown above. The term "sulfonamide" in the context of the present invention denotes an organic compound containing the core functional group >N-S(=O)₂- where the N atom is attached to organic moieties R₁ and R₂ while the S atom is further attached to a fluorine (F) atom. In a particular embodiment, the liquid electrolyte of the present invention comprises one sulfonamide of formula I; in another particular embodiment, it comprises two or more sulfonamides of formula I; in yet another embodiment, it comprises three or more sulfonamides of formula I. In a preferred embodiment, the liquid electrolyte of the present invention comprises only one sulfonamide of formula I.

In an embodiment, the groups R₁ and R₂ are the same. In another embodiment, the groups R₁ and R₂ are different.

Typically, the groups R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), a C₆-C₁₂ aryl group which may be substituted with one or more fluorine atom(s), and CH₂CH₂O-(CH₂CH₂O)ₙ-R₃, wherein R₃ is a methyl or ethyl group and n is an integer from 0 to 20; or R₁ and R₂ may be combined with each other to form a nitrogen-containing aliphatic ring.

A "C₁-C₁₂ alkyl" as used herein refers to a branched or linear aliphatic carbon chain consisting of 1 to 12 carbon atoms. Illustrative examples of C₁-C₁₂ alkyl groups include methyl, ethyl, n-propyl, i-propyl, n-butyl, i-butyl, t-butyl, pentyl, hexyl, heptyl, octyl, etc. In preferred embodiments, the aliphatic chain may comprise less carbon atoms, for example 6 ("C₁-C₆ alkyl") or 3 ("C₁-C₃ alkyl") carbon atoms. Methyl groups are the most preferred alkyl groups. The alkyl chain may be partially or completely fluorinated ("perfluorinated"), meaning that at least one but not all hydrogen atoms of any C-H bond is replaced by a fluorine atom or that all hydrogen atoms of any C-H bond is replaced by a fluorine atom, respectively.

A "C₂-C₁₂ alkenyl" as used herein refers to linear or branched aliphatic groups having from 2 to 12 carbon atoms and having at least 1 double C=C bond. Such alkenyl groups include ethenyl (-CH=CH₂), n-2-propenyl (allyl,-CH₂CH=CH₂) and the like.

A "C₆-C₁₂ aryl" as used herein refers to aromatic hydrocarbon rings that contain 6 to 12 carbon atoms, also as two fused rings, optionally substituted with alkyl groups as already defined above, such as phenyl, α-naphthyl, β-naphthyl, m-methylphenyl, p-trifluoromethylphenyl and the like.

More particularly, R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), and CH₂CH₂O-(CH₂CH₂O)ₙ-R₃, wherein R₃ is H or a methyl group and n is an integer from 0 to 10; or R₁ and R₂ may be combined with each other to form a 3- to 7-membered nitrogen-containing aliphatic ring.

Preferably, R₁ and R₂ are each independently selected from a linear or branched C₁-C₆ alkyl group which may be substituted with one or more fluorine atom(s), a linear or branched C₂-C₆ alkenyl group which may be substituted with one or more fluorine atom(s), and CH₂CH₂O-(CH₂CH₂O)ₙ-R₃, wherein R₃ is H or a methyl group and n is an integer from 0 to 10; or R₁ and R₂ may be combined with each other to form a 3- to 7-membered nitrogen-containing aliphatic ring.

More preferably, R₁ and R₂ are each independently selected from a linear or branched C₁-C₆ alkyl group, a linear or branched C₂-C₆ alkenyl group, and CH₂CH₂O-(CH₂CH₂O)ₙ-R₃, wherein R₃ is a methyl group and n is an integer from 0 to 5; or R₁ and R₂ may be combined with each other to form a 3- to 7-membered nitrogen-containing aliphatic ring. Even more preferably, R₁ and R₂ are each independently selected from a linear C₁-C₆ alkyl group, a C₂-C₆ alkenyl group, and a -CH₂CH₂OCH₂CH₂O-CH₃ group; or R₁ and R₂ may be combined with each other to form a 3- to 6-membered nitrogen-containing aliphatic ring.

Even more preferably, R₁ and R₂ are each independently selected from a linear C₁-C₃ alkyl group, a C₂-C₃ alkenyl group, and -CH₂CH₂O-CH₃. More preferably, R1 and are each independently selected from a linear C₁-C₃ alkyl group.

In the most preferred embodiment, R₁ = R₂ = CH₃.

The at least one sulfonamide may vary from 5 to 95 wt.% of the weight of the liquid electrolyte, preferably from 10 to 90 wt.% of the weight of the electrolyte, more preferably from 30 to 90 wt.% of the weight of the electrolyte; even more preferably from 50 to 90 wt.% of the weight of the electrolyte; most preferably, from 70 to 90 wt.% of the weight of the electrolyte.

In a particular embodiment, the electrolyte of the first aspect of the invention does not comprise a polymer selected from the group consisting of sulfonamide-containing polymers, polyalkylene oxides, polyalkylenimines, polyalkylene sulphides, poly(meth)acrylates, polyphosphazenes, polysiloxanes, polyvinyl alcohol (PVA), polyvinyl amine (PVAm), polyvinyl acetate (PVAc), polyvinyl halides, polyvinylidene difluoride-hexafluropropylene (PVdF-HFP), polyacrylonitrile (PAN), poly(vinylpyrrolidone) (PVP), poly(2-vinylpyridine), poly(ε-caprolactone) (PCL), polymaleimides and their alternate polymers with alkenes, polyaniline (PANI), chitosan (CS), or any blend or any copolymer or any cross-linked polymer thereof.

### Lithium salts

The liquid electrolyte of the invention comprises a combination of at least two lithium salts, preferably comprising at least the lithium salt LiFSI, of formula

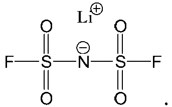

In the present invention, the liquid electrolyte comprises a combination of at least two lithium salts, selected from the group consisting of LiClO₄, LiNO₃, LiBF₄, LiAsF₆, LiPF₆, LiBF₃Cl, LiF, LiN(SO₂F)₂, LiN(SO₂CF₂H)₂, LiN(SO₂CF₃)₂, LiN(SO₂CF₃)(SO₂CF₂H), LiN(SO₂CF₃)(SO₂F), LiN(SO₂CHF₂)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃ and LiCF₃SO₃.

In an embodiment, the combination of at least two lithium salts is selected from LiClO₄, LiNO₃, LiBF₄, LiAsF₆, LiPF₆, LiBF₃Cl, LiF, LiN(SO₂F)₂, LiN(SO₂CF₃)₂, LiN(SO₂CF₃)(SO₂CF₂H), LiN(SO₂CF₃)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃, LiCF₃SO₃.

In another embodiment, the combination of at least two lithium salts is selected from LiN(SO₂F)₂, LiN(SO₂CF₃)₂, LiN(SO₂CF₃)(SO₂CF₂H), LiN(SO₂CF₃)(SO₂F), LiB(C₂O₄)₂, LiBF₂(C₂O₄), LiC(SO₂CF₃)₃, LiPF₃(C₂F₅)₃, LiCF₃SO₃, and LiNO₃.

In a preferred embodiment, the combination of at least two lithium salts is selected from LiN(SO₂F)₂, LiN(SO₂CF₃)(SO₂CF₂H), LiB(C₂O₄)₂, LiBF₂(C₂O₄), LiN(SO₂CF₃)₂, and LiN(SO₂CF₃)(SO₂F); more preferably selected from LiN(SO₂F)₂, LiN(SO₂CF₃)(SO₂CF₂H), LiB(C₂O₄)₂, LiBF₂(C₂O₄), LiN(SO₂CF₃)₂, and LiN(SO₂CF₃)(SO₂F); even more preferably, selected from LiN(SO₂F)₂, LiN(SO₂CF₃)(SO₂CF₂H), LiN(SO₂CF₃)₂, and LiBF₂(C₂O₄).

In a most preferred embodiment, the combination of at least two lithium salts is LiN(SO₂F)₂ and LiBF₂(C₂O₄), also known as LiFSI and LiDFOB, respectively.

In a particular embodiment, the at least two lithium salts comprised in the liquid electrolyte vary from 5 to 45 wt.%, preferably from 5 to 40 wt.%, more preferably from 5 to 25 wt.%, even more preferably from 8 to 18 wt.%, most preferably from 10 to 15 wt.%, even most preferably is about 12 wt.% with respect to the total weight of the electrolyte.

### Organic carbonate

The electrolyte of the invention is further characterized in that it does not comprise an organic carbonate. For the purpose of the invention, any carbonate O=C(-O⁻)₂ that contains an organic, cyclic or linear chain with at least C and H atoms has to be considered an organic carbonate. The organic carbonate is preferably a liquid at room temperature. As practical examples, the definition of organic carbonates includes, even though the list is non-limiting, cyclic alkylene carbonates (ethylene carbonate, propylene carbonate, butylene carbonate and the likes) and di(hydrocarbyl) carbonates, such as dialkyl carbonates, diaryl carbonates, alkyl aryl carbonates or mixtures thereof.

Substituted derivatives of the aforementioned organic carbonates are also excluded from the liquid electrolyte of this invention. One or more substituents may be present on the alkylene, alkyl or aryl moieties. Non-limiting examples of substituents include halogen, alkoxy, hydroxyl, nitrogen substituents, phosphorous substituents, sulphur substituents and similar moieties.

As derivable from the examples below, the presence of carbonates in the liquid electrolyte composition adversely affects cyclability of the cell where it is incorporated, with a marked drop observed after 50 cycles.

### Co-solvent and/or filler

The liquid electrolyte of the first aspect of the invention further comprises at least one of a co-solvent or a filler.

The co-solvent is selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, -(CH₂)ₙCF₃, -(CH₂)ₙF, or - (CH₂)ₙCH₂F or -(CH₂)ₙCHF₂ where n = 1-10, and any mixtures thereof.

In the context of the invention, the term "co-solvent" refers to a substance suitable for dissolving the lithium salts in the electrolyte.

In a particular embodiment, when the electrolyte is characterized in that it does not comprise a carbonate, the electrolyte does not comprise a carbonate-based solvent.

In a particular embodiment, the co-solvent is selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and mixtures thereof.

In a preferred embodiment, the co-solvent is selected from the group consisting of triglyme, ethylene sulfite, and mixtures thereof.

In a particular embodiment, the co-solvent is present in an amount ranging from 1 to 50 wt% with respect to the total weight of the electrolyte, preferably from 1 to 40 wt%, more preferably from 1 to 30 wt%, even more preferably from 1 to 20 wt%, and most preferably from 1 to 10 wt%, with respect to the total weight of the electrolyte.

In a preferred embodiment:
- the amount of the at least one sulfonamide may vary from 5 to 95 wt.% of the weight of the electrolyte; preferably from 10 to 90 wt.% of the weight of the electrolyte; more preferably from 30 to 90 wt.% of the weight of the electrolyte; even more preferably from 50 to 90 wt.% of the weight of the electrolyte; most preferably, from 70 to 90 wt.% of the weight of the electrolyte;
- the amount of the at least two lithium salts may vary from 5 to 45 wt.%, preferably from 5 to 40 wt.%, more preferably from 5 to 25 wt.%, even more preferably from 8 to 18 wt.%, most preferably from 10 to 15 wt.%, even most preferably is about 12 wt.% with respect to the total weight of the electrolyte; and,
- the amount of the at least one co-solvent may vary from 1 to 50 wt.%, preferably from 1 to 40 wt.%, more preferably from 1 to 30 wt%, even more preferably from 1 to 20 wt%, and most preferably from 1 to 10 wt%, with respect to the total weight of the electrolyte. In the context of the present invention, "fillers" do not necessarily dissolve the lithium salts but rather deliver additional benefits such as improved wettability of the electrodes that are comprised in the electrochemical cell or battery. Examples of fillers are known in the art and include, among others: fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2-trifluoroethoxy)ethane (D2), bis(2,2,2-trifluoroethyl)ether (BTFE), 1,1,2,2-tetrafluoroethyl-2,2,3,3-tetrafluoropropylether (TTE) and polyoxyethylene alkyl ethers.

In another preferred embodiment:
- the amount of the at least one sulfonamide may vary from 5 to 95 wt.% of the weight of the electrolyte; preferably from 10 to 90 wt.% of the weight of the electrolyte; more preferably from 30 to 90 wt.% of the weight of the electrolyte; even more preferably from 50 to 90 wt.% of the weight of the electrolyte; most preferably, from 70 to 90 wt.% of the weight of the electrolyte;
- the amount of the at least two lithium salts may vary from 5 to 45 wt.%, preferably from 5 to 40 wt.%, more preferably from 5 to 25 wt.%, even more preferably from 8 to 18 wt.%, most preferably from 10 to 15 wt.%, even most preferably is about 12 wt.% with respect to the total weight of the electrolyte; and,
- the amount of the at least one filler may vary from 1 to 50 wt.%, preferably from 1 to 40 wt.%, more preferably from 1 to 30 wt%, even more preferably from 1 to 20 wt%, and most preferably from 1 to 10 wt%, with respect to the total weight of the electrolyte.

### Further additives

In a particular embodiment, the liquid electrolyte of the first aspect of the invention further comprises additives such as scavengers for HF and water, and/or flame retardants. In a particular embodiment, the scavenger is Lithium hexamethyldisilazide (LiHMDS). This is particular useful in the formation of an (electro)chemical robust cathode|electrolyte interphase (CEI).

In another particular embodiment, the flame retardant is selected from the group consisting of Hexafluorocyclotriphosphazene (HFPN), Ethoxy (pentafluoro) cyclotriphosphazene (PFPN), ammonium polyphosphate, melamine polyphosphate, pentaerythritol phosphate, piperazine pyrophosphate, aluminum diethyl hypophosphite, aluminum hypophosphite, aluminum phosphate, calcium borate, zinc borate, magnesium borate, aluminum borate, silicon dioxide, metakaolin, sepiolite, mica, zeolite, montmorillonite, glass powder and combinations thereof, preferably Hexafluorocyclotriphosphazene (HFPN), Ethoxy (pentafluoro) cyclotriphosphazene (PFPN), and combinations thereof.

### Advantages

The electrolyte of the invention is characterized in that it exhibits an exceptional compatibility with Li metal, significantly improved safety and enhanced performance due to improved ionic conductivity even at low temperatures. Additionally, the electrolyte of the invention is much less corrosive to the battery components prolonging the life of the battery. Further advantages are found throughout this text, including the example section.

### Further embodiments of the electrolyte

In a particular embodiment, the electrolyte of the invention comprises:
i. at least one sulfonamide with general formula I 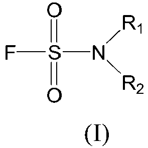 wherein
   - R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), a C₆-C₁₂ aryl group which may be substituted with one or more fluorine atom(s), and CH₂CH₂O-(CH₂CH₂O)ₙ-R₃, wherein R₃ is a methyl or ethyl group and n is an integer from 0 to 20; or R₁ and R₂ may be combined with each other to form a nitrogen-containing aliphatic ring;
ii. a combination of at least two lithium salts, selected from the group consisting of LiClO₄, LiNO₃, LiBF₄, LiAsF₆, LiPF₆, LiBF₃Cl, LiF, LiN(SO₂F)₂, LiN(SO₂CF₂H)₂, LiN(SO₂CF₃)₂, LiN(SO₂CF₃)(SO₂CF₂H), LiN(SO₂CF₃)(SO₂F), LiN(SO₂CHF₂)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃ and LiCF₃SO₃;
iii. at least one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, -(CH₂)ₙCF₃, -(CH₂)ₙF, or -(CH₂)ₙCH₂F or -(CH₂)ₙCHF₂ where n = 1-10, and any mixtures thereof; and
iv. optionally, a filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers;
and wherein the liquid electrolyte does not comprise an organic carbonate.

In a preferred embodiment, the electrolyte of the invention comprises:
i. at least one sulfonamide with general formula I 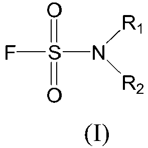 wherein
   - R₁ and R₂ are each independently selected from a linear C₁-C₃ alkyl group, a C₂-C₃ alkenyl group, and -CH₂CH₂O-CH₃;
ii. a combination of at least two lithium salts, selected from LiN(SO₂F)₂, LiN(SO₂CF₃)(SO₂CF₂H), LiN(SO₂CF₃)₂, and LiBF₂(C₂O₄);
iii. at least one co-solvent selected from the group consisting of triglyme, ethylene sulfite, and mixtures thereof; and
iv. optionally, a filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers;
and the liquid electrolyte does not comprise an organic carbonate.

In a more preferred embodiment, the electrolyte of the invention comprises:
i. N,N-dimethylsulfamoyl fluoride;
ii. a combination of the lithium salt LiFSI and LiBF₂(C₂O₄); and
iii. at least one co-solvent selected from the group consisting of triglyme, ethylene sulfite, and mixtures thereof; and
iv. optionally, a filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers;
and wherein the liquid electrolyte does not comprise an organic carbonate.

In yet another preferred embodiment, the electrolyte of the invention comprises:
i. N,N-dimethylsulfamoyl fluoride;
ii. a combination of the lithium salt LiFSI and LiBF₂(C₂O₄); and
iii. at least one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers; and
iv. optionally, a co-solvent selected from the group consisting of triglyme, ethylene sulfite, and mixtures thereof;
and wherein the liquid electrolyte does not comprise an organic carbonate

### Electrochemical cell and battery

The electrolyte of the first aspect of the invention is particularly useful in electrochemical devices such as electrochemical cells or batteries, particularly secondary electrochemical cells or batteries wherein the cell reactions are reversible.

The second aspect of the invention relates to an electrochemical cell or a battery comprising the liquid electrolyte according to the first aspect of the invention.

In a preferred embodiment, the second aspect of the invention relates to an electrochemical cell or a battery comprising the electrolyte according to any, preferred or particular, embodiment of the first aspect of the invention defined above, and further comprising an anode, a cathode and, optionally, a separator.

In a preferred embodiment, the second aspect of the invention relates to a lithium metal battery comprising the electrolyte according to any embodiment of the first aspect of the invention defined above. A lithium metal battery is a battery characterized in that it comprises an anode consisting essentially of metallic lithium.

In a further preferred embodiment, the second aspect of the invention relates to a lithium metal battery comprising a cathode wherein the cathode material is selected from the group consisting of lithium manganese oxide, lithium nickel oxide, lithium nickel manganese cobalt oxide, lithium nickel manganese oxide, lithium manganese cobalt oxide, lithium copper oxide, lithium copper sulphide, lithium iron phosphate, lithium iron sulphide, lithium manganese iron phosphate and lithium nickel cobalt aluminium oxide. In a further preferred embodiment, the second aspect of the invention relates to a lithium metal battery comprising a cathode wherein the cathode material is lithium nickel manganese cobalt oxide such as LiNi_{0.6}Mn_{0.2}Co_{0.2}O₂ (NMC622), lithium iron phosphate LiFePO₄ (LFP) and a lithium manganese iron phosphate LiFeₓMn₁₋ₓPO₄, wherein x < 1 (LMFP). In a more preferred embodiment, the cathode is LFP.

The cathode may additionally contain other additives, such as a conductive carbon and a polymeric binder. In an embodiment, the cathode further comprises a conductive carbon selected from the group consisting of carbon black (for example Super P^{®}), carbon nanotubes, and mixtures thereof. In another particular embodiment, the cathode further comprises polyvinylidene fluoride (PVdF) as a polymeric binder. It is preferred that the weight ratio between LFP : conductive carbon: polymeric binder is about 96.5:1.5:2.

In a further preferred embodiment, the second aspect of the invention relates to a lithium metal battery further comprising a separator, preferably a porous separator, arranged between at least one electrode and the electrolyte in such a configuration that lithium cations can flow across said separator between the electrolyte and the surface of said at least one electrode.

Examples of suitable separators are known to the skilled person, and include polypropylene membranes, preferably microporous polypropylene membranes, or ceramic materials. A preferred separator is Celgard^{®} H2010 (a 20 µm trilayer microporous membrane PP/PE/PP).

In specific embodiments, the separator has a thickness of between 1 and 50 µm, preferably of between 15 and 35 µm, more preferably of about 20 µm. The porosity of the separator may also vary between a certain range, particularly the average pore diameter is comprised between 0.001 and 0.100 µm, preferably between 0.020 and 0.080 µm, more preferably is about 0.064 µm.

In a particular embodiment, the electrochemical cell of the first aspect of the invention comprises an anode, preferably a lithium metal anode.

In a further preferred embodiment, the electrochemical cell or lithium metal battery of the second aspect of the invention has a low resistance at the interface between the electrolyte and lithium metal electrode. In particular, the interfacial resistance may be determined by measuring electrochemical impedance spectra (EIS) of the electrochemical cell or lithium metal battery using a potentiostat. More particularly, electrochemical impedance spectra recorded in the range from 10⁶ to 10⁻² Hz at 25 °C. According to any of the above embodiments, the electrochemical cell or lithium metal battery has an electrochemical impedance lower than 100 Ω cm², preferably lower than 75 Ω cm², more preferably lower than 50 Ω cm², even more preferably of about 35 Ω cm².

### Uses of the electrochemical cell of the invention

The electrochemical cell of the invention may be applied to a variety of electronic devices which may include, but are not limited to: electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

### Methods for preparing the electrolyte

In a fourth aspect, the invention is directed at a method for preparing the liquid electrolyte comprising the steps of:
(i) providing a combination of at least two lithium salts;
(ii) mixing at least one sulfonamide of formula I with the salts of step (i);
(iii) adding to the mixture, at least
   a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, - (CH₂)ₙCH₃, -(CH₂)ₙCF₃, -(CH₂)ₙF, or -(CH₂)ₙCH₂F or -(CH₂)ₙCHF₂ where n = 1-10; and/or
   b. a filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers; and
(iv) stirring the resulting mixture.

In a particular embodiment, steps (i) and (ii) of the method above may be performed by using the neat components of the electrolyte (e.g. the neat solid or liquid) or, alternatively, said components may be dissolved in at least one solvent prior to or after mixing. The use of the at least one co-solvent is particularly needed when the mixture of the sulfonamide of formula (I) and the lithium salts is solid, or comprises solid particles such as a suspension, or a precipitate.

It is preferable that the mixture obtained from step (iii) is stirred for a certain time to ensure that a homogeneous solution is obtained (i.e. no suspended matter is visible). The stirring is performed magnetically at 100 rpm, at 200 rpm, at 300 rpm, at 400 rpm, at 500 rpm, at 600 rpm, at 700 rpm, at 800 rpm, at 900 rpm, at 1000 rpm; preferably, the stirring is performed in a range between 100 and 500 rpm, even more preferably at about 300 rpm. Additionally, the mixture from step (iii) is stirred for at least 5 min, at least 15 min, at least 30 min, at least 1 hour, at least 2 hours, at least 4 hours, at least 6 hours, at least 12 hours, at least 1 day; preferably, the mixture from step (iii) is stirred for 1 to 4 hours, more preferably for 2 hours.

All the steps of the method above are performed at a temperature comprised between 10 and 30 °C, preferably between 15 and 25 °C, even more preferably between 20 and 25 °C (room temperature).

### Methods for preparing the electrochemical cell or battery comprising said electrolyte

The method for preparing the electrochemical cell of the invention is apparent to the skilled person using common general knowledge. A further aspect of the invention is directed at said method, which comprises the steps of:
(i) providing a cathode for an electrochemical cell or a battery;
(ii) providing an anode for an electrochemical cell or a battery;
(iii) providing the liquid electrolyte as defined above or in any preferred or particular embodiment of the first aspect of the invention; and
(iv) coating the surface of the cathode provided in step (i) and of the anode provided in step (ii) with the electrolyte provided in step (iii), being said surfaces optionally covered with a porous separator, prior to coating with the electrolyte, in a manner that the electrolyte is arranged between the cathode and the anode such that lithium cations can flow from the cathode to the anode.

In particular embodiment, the provision of the cathode in step (i) comprises the preparation of a slurry in a solvent, for example N-methyl-2-pyrrolidone, and casting on a suitable substrate, for example an aluminum current collector.

In a particular embodiment, the coating step (iv) is performed by casting techniques as known in the art. As stated above such surfaces may be covered with a porous separator. Preferably, such porous separator is a polymeric separator, more preferably is a polypropylene separator.

Preferred materials for the preparation of the electrochemical cell or battery are as defined in the preferred and particular embodiments of the electrochemical cell described above.

### EXAMPLES

The following examples are intended to illustrate but not to limit the disclosed embodiments.

### List of abbreviations

FSA11: Dimethylsulfamoyl Fluoride
Triglyme: Triethylene glycol dimethyl ether
LiFSI: lithium bis(fluorosulfonyl)imide (LiN(SO₂F)*₂*
LiDFOB: Lithium difluoro(oxalato)borate (LiBF₂(C₂O₄))
EC: ethylene carbonate
FEC: fluoroethylene carbonate
rpm: revolutions per minute
RT: room temperature

### Reagents and starting materials

The following chemicals were purchased from Sigma-Aldrich, Chemfish, TCI and were dried under vacuum (when required at 70 °C) and/or with molecular sieves before use.

### Example 1: Preparation of electrolytes

Five electrolytes having the compositions (expressed in weight %) disclosed in the table below were prepared according to the following general procedure.

### Electrolyte 1 (E1) (comparative)

LiFSI was weighed in a vial and FSA11 was added in an appropriate amount. The resulting mixture was left under stirring for approximately 2 h at 300 rpm and room temperature.

### Electrolyte 2 (E2) (according to the invention)

In a first step, LiDFOB was weighed in a vial and the corresponding amount of triglyme was added and left stirring during 10 minutes at 300 rpm and room temperature. Next, LiFSI was weighed and FSA11 was added. The resulting mixture was left under stirring for approximately 2 h at 300 rpm and room temperature.

### Electrolyte 3 (E3) (comparative)

In a first step, LiDFOB was weighed in a vial and the corresponding amount of EC was added and left stirring during 10 minutes at 300 rpm and room temperature. Next, LiFSI was weighed and FSA11 was added. The resulting mixture was left under stirring for approximately 2 h at 300 rpm and room temperature.

### Electrolyte 4 (E4) (comparative)

In a first step, LiDFOB was weighed in a vial and the corresponding amount of FEC was added and left stirring during 10 minutes at 300 rpm and room temperature. Next, LiFSI was weighed and FSA11 was added. The resulting mixture was left under stirring for approximately 2 h at 300 rpm and room temperature.

The final electrolyte compositions were the following:

| **Compound** | **Electrolyte E1 (comparative)** | **Electrolyte E2 (invention)** | **Electrolyte E3 (comparative)** | **Electrolyte 4 (comparative)** |
|---|---|---|---|---|
| **FSA11** | 86.83 | 81.83 | 80.2 | 79.43 |
| **TRIGLYME** | -- | 5.98 | | |
| **EC** | | | 7.85 | |
| **FEC** | | | | 8.74 |
| **LiFSI** | 13.17 | 11.72 | 11.48 | 11.37 |
| **LiDFOB** | -- | 0.47 | 0.46 | 0.46 |

### Example 2: Preparation of electrochemical cell

Lithium metal batteries comprising the electrolytes of Example 1 were prepared according to the following procedure:
*Cathode preparation:* LiFePO₄ cathode was composed of 96.5 wt.% of LFP (Y7 from Hunan Yuneng), 1.5 wt. % of conductive carbon (comprised of 1.0% Super P Carbon and 0.5% of Carbon Nanotubes), and 2 wt.% of polymeric binder (PVdF). A slurry was made using N-methyl-2-pyrrolidone (NMP) as solvent and after homogenization of the dispersion it was cast on a 12 µm thick aluminum current collector. Finally, it was dried overnight at 80-120 °C under vacuum, leading to an average loading of ca. 2.3 mAh cm⁻².

*Anode provision*: Li metal foil (China Energy Lithium, 14 mm diameter and 50 µm thickness).

*Cell assembly*: a coin cell was assembled in an Argon filled glovebox using the LFP (12 mm diameter) cathode as defined above, Celgard^{®} H2010 (a 20 µm trilayer microporous membrane PP/PE/PP) as separator and the Li metal disk as anode. The liquid electrolytes prepared according to example 1 were injected between the cathode and the separator.

### Example 3: Electrochemical measurements

The cells prepared as described in example 2 were cycled galvanostatically, between 2.8 V and 3.65 V vs. Li/Li+ using a Maccor Battery Tester (Series 4000). The applied protocol was based on 1 cycle at a current of C/10, then constant cycling at either C/2-D/2 at 25 °C.

Figure 1 shows the capacity retention vs. cycle number for the Li°∥LFP cells at 25 °C, comprising an electrolyte containing a) a mixture of LiFSI lithium salt in FSA11 at a molar concentration of 1.0 M (E1); b) LiFSI/LiDFOB lithium salts at a molar concentration of 0.95 M and 0.05 M, respectively in a FSA11/Triglyme in 90/10 vol.% ratio of solvents (E2); c) LiFSI/LiDFOB lithium salts at a molar concentration of 0.95 M and 0.05 M, respectively in a FSA11/EC in 90/10 vol.% ratio of solvents (E3); and d) LiFSI/LiDFOB lithium salts at a molar concentration of 0.95 M and 0.05 M, respectively in a FSA11/FEC in 90/10 vol.% ratio of solvents (E4).

In Figure 1, it is shown that the electrolyte (E2) according to the invention and having a mixture of two lithium salts and a co-solvent exhibits better capacity retention, when compared to the capacity retention of an electrolyte having only one lithium salt and lacking a co-solvent (E1), used as a reference. After 75 cycles. E1 and E2 are reaching a specific capacity of 124 mAh g⁻¹ and 141 mAh g⁻¹, respectively.

It can also be seen that the incorporation of carbonates as co-solvents in comparative electrolytes E3 and E4 adversely affects cyclability, leading to noticeable capacity fading after 50 cycles when compared to electrolytes lacking carbonates. Without wishing to be bound to any theory, the addition of carbonates seems to have an impact on formed SEI on the anode side. The columbic efficiency of cycled cells with carbonates is lower at and of cycling compared to the one without carbonates, suggesting that more side reaction is appearing on the anode side. After around 55 cycles the internal resistivity of the cell rises to the value where further cycling is impossible.

## Claims

1. A liquid electrolyte comprising:
i. at least one sulfonamide with general formula I 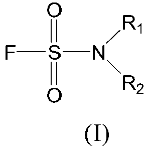 wherein
- R₁ and R₂ are each independently selected from a linear or branched C₁-C₁₂ alkyl group which may be substituted with one or more fluorine atom(s), a linear or branched C₂-C₁₂ alkenyl group which may be substituted with one or more fluorine atom(s), a C₆-C₁₂ aryl group which may be substituted with one or more fluorine atom(s), and CH₂CH₂O-(CH₂CH₂O)ₙ-R₃, wherein R₃ is a methyl or ethyl group and n is an integer from 0 to 20; or R₁ and R₂ may be combined with each other to form a nitrogen-containing aliphatic ring;
ii. a combination of at least two lithium salts selected from the group consisting of LiClO₄, LiNO₃, LiBF₄, LiAsF₆, LiPF₆, LiBF₃Cl, LiF, LiN(SO₂F)₂, LiN(SO₂CF₂H)₂, LiN(SO₂CF₃)₂, LiN(SO₂CF₃)(SO₂CF₂H), LiN(SO₂CF₃)(SO₂F), LiN(SO₂CHF₂)(SO₂F), LiN(C₂F₅SO₂)(SO₂F), LiB(C₂O₄)₂, LiBF₂(C₂O₄), LiC(SO₂CF₃)₃, LiPF₃(C₂F₅)₃, and LiCF₃SO₃; and
iii. at least,
a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, -(CH₂)ₙCF₃, -(CH₂)ₙF, or - (CH₂)ₙCH₂F or -(CH₂)ₙCHF₂ where n = 1-10; and/or
b. one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2-trifluoroethoxy)ethane (D2), bis(2,2,2-trifluoroethyl)ether (BTFE), 1,1,2,2-tetrafluoroethyl-2,2,3,3-tetrafluoropropylether (TTE) and polyoxyethylene alkyl ethers;
and wherein the liquid electrolyte does not comprise an organic carbonate.

2. The liquid electrolyte according to claim 1, wherein R₁ and R₂ in the at least one sulfonamide with general formula I are each independently selected from a linear C₁-C₆ alkyl group, a C₂-C₆ alkenyl group, and -CH₂CH₂OCH₂CH₂O-CH₃; or R₁ and R₂ may be combined with each other to form a 3- to 6-membered nitrogen-containing aliphatic ring.

3. The liquid electrolyte according to any one of claims 1 or 2, wherein the at least one sulfonamide represents from 5 to 95 wt.% of the weight of the liquid electrolyte, preferably from 30 to 90 wt.% of the weight of the electrolyte, more preferably from 50 to 90 wt.% of the weight of the electrolyte; even more preferably, from 70 to 90 wt.% of the weight of the electrolyte.

4. The liquid electrolyte according to any one of claims 1 to 3, wherein the combination of at least two lithium salts is selected from LiN(SO₂F)₂, LiN(SO₂CF₃)(SO₂CF₂H), LiB(C₂O₄)₂, LiBF₂(C₂O₄), LiN(SO₂CF₃)₂, LiN(SO₂CF₃)(SO₂F), LiN(SO₂F)(SO₂CF₂H), , preferably LiN(SO₂F)₂ and LiBF₂(C₂O₄).

5. The liquid electrolyte according to any one of claims 1 to 4, wherein the amount of the at least two lithium salts ranges from 5 to 45 wt.%, preferably from 5 to 25 wt.%, more preferably from 8 to 18 wt.%, even more preferably from 10 to 15 wt.%, with respect to the total weight of the electrolyte.

6. The liquid electrolyte according to any one of claims 1 to 5, wherein the at least one co-solvent is present and is selected from the group consisting of triglyme, ethylene sulfite, and mixtures thereof.

7. The liquid electrolyte according to any one of claims 1 to 6, wherein the electrolyte further comprises:
- at least one scavenger selected from the group consisting of Lithium hexamethyldisilazide (LiHMDS); and/or
- at least one flame retardant selected from the group consisting of Hexafluorocyclotriphosphazene (HFPN), Ethoxy (pentafluoro) cyclotriphosphazene (PFPN), ammonium polyphosphate, melamine polyphosphate, pentaerythritol phosphate, piperazine pyrophosphate, aluminum diethyl hypophosphite, aluminum hypophosphite, aluminum phosphate, calcium borate, zinc borate, magnesium borate, aluminum borate, silicon dioxide, metakaolin, sepiolite, mica, zeolite, montmorillonite, glass powder and combinations thereof, preferably Hexafluorocyclotriphosphazene (HFPN), Ethoxy (pentafluoro) cyclotriphosphazene (PFPN), and combinations thereof.

8. The liquid electrolyte according to any one of claims 1 to 7, comprising:
i. N,N-dimethylsulfamoyl fluoride;
ii. a combination of the lithium salt LiFSI and LiBF₂(C₂O₄); and
iii. at least one co-solvent selected from the group consisting of triglyme, ethylene sulfite, and mixtures thereof;
wherein the liquid electrolyte does not comprise an organic carbonate.

9. The liquid electrolyte according to any one of claims 1 to 6, wherein the at least one filler is present and is selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2-trifluoroethoxy)ethane (D2), bis(2,2,2-trifluoroethyl)ether (BTFE), 1,1,2,2-tetrafluoroethyl-2,2,3,3-tetrafluoropropylether (TTE) and polyoxyethylene alkyl ethers.

10. An electrochemical cell or battery comprising the liquid electrolyte according to any one of claims 1 to 9, a cathode, an anode, and, optionally, a separator.

11. The electrochemical cell or battery according to claim 10, wherein the cathode is selected from the group consisting of lithium iron phosphate LiFePO₄ (LFP) and a lithium manganese iron phosphate LiFeₓMn₁₋ₓPO₄, wherein x < 1 (LMFP).

12. The electrochemical cell or battery according to any one of claims 10 or 11, comprising an anode selected from a lithium metal.

13. Use of the electrochemical cell or battery according to any one of claims 10 to 12, in electric motors; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; or electric power storage systems.

14. A method for preparing the liquid electrolyte according to any one of claims 1 to 9, comprising the steps of
(i) providing a combination of at least two lithium salts;
(ii) mixing at least one sulfonamide of formula I with the salts of step (i);
(iii) adding to the mixture at least,
a. one co-solvent selected from the group consisting of 1,2-bis (2,2-difluoroethoxy) ethane (DF2EO), dimethoxy ethane (DME), 1,2-diethoxyethane (DEE), 1,3-dioxolane (DOL), diethylene glycol dimethyl ether (DEGDME), triethylene glycol dimethyl ether (Triglyme), tetraethylene glycol dimethyl ether (TEGDME), poly(ethylene glycol) dimethyl ether (PEGDME), tetrahydropyran (THP), γ-butyrolactone, tetrahydrofuran (THF), 2-methyltetrahydrofuran, diethylether, methyl-tert-butylether, succinonitrile (SN), glutaronitrile (GN), adiponitrile (AN), N,N-dimethyltrifluoromethane-sulfonamide (TFSA), N,N-dimethyldifluoromethane-sulfonamide (DFSA), ethylene sulfite (ES), propylene sulfite (PS), di-ethylene sulfite (DES), di-methylsulfite (DMS), triethyl phosphate (TEP), difluoroethyl acetate (DFEA), methyl difluoroacetate (MDFA), 2-(2,2,2-trifluoroethoxy)ethyl methyl ether (TEME), 2-methoxyethoxy 2,2 difluroethylether (MDFE), triethyl phosphate (TEP), trimethyl phosphate (TMP), tripropyl phosphate (TPP), methyl formate (MF), methyl acetate (MA), methyl butyrate (MB), ethyl acetate (EA), ethyl propionate (EP), trimethylsilylpropane sulfonate (TMSP), and acetamide of chemical structure R₁CONR₂R₃ where R₁ can be F, CF₃, CF₂H or CFH₂, and R₂ and R₃ can be independently H, -(CH₂)ₙCH₃, -(CH₂)ₙCF₃, -(CH₂)ₙF, or -(CH₂)ₙCH₂F or - (CH₂)ₙCHF₂ where n = 1-10; and/or
b. one filler selected from the group consisting of fluorobenzene (FPh), 1,2-difluoro benzene, 1,3-difluoro benzene, 1,4-difluorobenzene, anisole, fluoroanisole, tris(2,2,2-trifluoroethyl) orthoformate (TFEO), tetrafluoro 1-(2,2,2,-trifluoroethoxy)ethane (D2), bis(2,2,2-trifluoroethyl)ether (BTFE), 1,1,2,2,tetrafluoroethyl-2,2,3,3-tetrafluoropropylether (TTE) and polyoxyethylene alkyl ethers; and
(iv) stirring the resulting mixture.

15. A method for preparing the electrochemical cell or battery according to any one of claims 10 to 12 comprising the steps of:
(i) providing a cathode for an electrochemical cell or a battery;
(ii) providing an anode for an electrochemical cell or a battery;
(iii) providing the liquid electrolyte as defined in any one of claims 1 to 13; and
(iv) coating the surface of the cathode provided in step (i) and of the anode provided in step (ii) with the electrolyte provided in step (iii), being said surfaces optionally covered with a porous separator, prior to coating with the electrolyte, in a manner that the electrolyte is arranged between the cathode and the anode such that lithium cations can flow from the cathode to the anode.
